# EUROPÄISCHE PATENTSCHRIFT

(11) **EP 2 621 656 B1**
(45) Veröffentlichungstag und Bekanntmachung des Hinweises auf die Patenterteilung: **05.02.2020**
(21) Anmeldenummer: 11739075.7
(22) Anmeldetag: 04.08.2011
(51) Int. Cl.: B23D 59/00, B25F 5/00, H01Q 9/04

(54) **ORTUNGSVORRICHTUNG**
LOCALIZATION APPARATUS
DISPOSITIF DE LOCALISATION

(30) Priorität: 30.09.2010 DE 102010041729
(43) Veröffentlichungstag der Anmeldung: 07.08.2013
(73) Patentinhaber: Robert Bosch GmbH, 70442 Stuttgart (DE)
(72) Erfinder: BRAUN, Heiko, 70771 Leinfelden-Echterdingen (DE); POHLMANN, Martin, 70567 Stuttgart (DE)
(86) Internationale Anmeldenummer: PCT/EP2011/063435
(87) Internationale Veröffentlichungsnummer: WO 2012/041576

(56) Entgegenhaltungen:
- EP-A1- 1 422 022
- WO-A1-2004/061361
- WO-A1-2009/106164
- DE-A1-102006 061 581
- DE-C1- 10 050 655

## Beschreibung

### Ortungsvorrichtung

### Stand der Technik

Die Erfindung geht aus von einer Ortungsvorrichtung nach dem Oberbegriff des Anspruchs 1. Eine solche Ortungsvorrichtung ist aus DE10050655 bekannt.

Es ist bereits eine Ortungsvorrichtung, insbesondere ein Handortungsgerät, mit einer Ortungseinheit, die zumindest eine erste Antenne und eine zweite Antenne aufweist, vorgeschlagen worden.

### Offenbarung der Erfindung

Die Erfindung geht aus von einer Ortungsvorrichtung, insbesondere einem Handortungsgerät, mit einer Ortungseinheit, die zumindest eine erste Antenne und eine zweite Antenne aufweist.

Es wird vorgeschlagen, dass die Ortungseinheit zumindest ein Kompensationsmittel aufweist, das bei einem Betrieb zumindest ein Übersprechen eines Signals der ersten Antenne auf die zweite Antenne zumindest teilweise kompensiert. Unter einer "Ortungseinheit" soll insbesondere eine Einheit verstanden werden, die dazu vorgesehen ist, zumindest eine Information über ein von einem Werkstück unterschiedliches Objekt zu ermitteln. Vorteilhaft ermittelt die Ortungseinheit zumindest eine Anwesenheit des Objekts in einem Ortungsraum, insbesondere in einem Richtbereich einer der Antennen. Besonders vorteilhaft ermittelt die Ortungseinheit zumindest eine Information über eine Position des Objekts in dem Ortungsraum. Unter "vorgesehen" soll insbesondere speziell programmiert, ausgelegt und/oder ausgestattet verstanden werden. Insbesondere soll unter dem Begriff "Antenne" eine Einheit verstanden werden, die dazu vorgesehen ist, ein Signal zu senden und/oder zu empfangen. Vorzugsweise ist das Signal als ein Magnetfeld, als ein elektrisches Feld, als ein anderes, dem Fachmann als sinnvoll erscheinendes Signal und/oder bevorzugt als ein elektromagnetisches Feld ausgebildet. Zusätzlich könnte die Ortungseinheit einen Ultraschallsensor und/oder einen optischen Sensor, insbesondere zur Ortung zwischen dem Sensor und dem Werkstück, aufweisen. Vorteilhaft umfasst die Antenne zumindest einen Strahler. Vorzugsweise weisen zwei oder mehrere Antennen einen gleichen Strahler auf, das heißt die Antennen sind zumindest teilweise einstückig ausgebildet. Vorteilhaft weist die Ortungseinheit Antennen für unterschiedliche Felder und/oder Signale auf, wodurch eine besonders hohe Zuverlässigkeit erreicht werden kann. Vorzugsweise könnte die Ortungseinheit eine induktive Antenne für spannungsführende Leitungen aufweisen. Insbesondere soll unter einem "Strahler" ein Element der Antenne verstanden werden, das eine Leistung insbesondere zur Ortung abstrahlt. Unter einem "Kompensationsmittel" soll erfindungsgemäß ein Mittel verstanden werden, das zumindest eine Information des Übersprechens mit einem von der zweiten Antenne empfangenen Signal analog verknüpft. Alternativ oder zusätzlich könnte das Kompensationsmittel digital und insbesondere komplex verknüpfen. Vorzugsweise subtrahiert das Kompensationsmittel einen Wert des Übersprechens von dem empfangenen Signal. Vorzugsweise kompensiert das Kompensationsmittel außer dem Übersprechen der Antenne weitere Übersprechen, wie beispielweise in Leitungen und/oder in Baluns. Unter der Wendung "bei einem Betrieb" soll insbesondere während die erste Antenne ein Signal sendet und insbesondere während die zweite Antenne ein Signal empfängt verstanden werden. Vorzugsweise empfängt die zweite Antenne eine Reflexion, vorteilhaft eine nur phasenveränderte Reflexion, des von der ersten Antenne gesendeten Signals an einem georteten Objekt und/oder insbesondere an einem Werkstück. Unter einem "Übersprechen der ersten Antenne auf die zweite Antenne" soll insbesondere ein Signalverlauf über einen Signalweg von der ersten Antenne auf die zweite Antenne innerhalb zumindest eines Teils von der Ortungseinheit und vorteilhaft innerhalb der Antenne verstanden werden. Vorzugsweise ist das Übersprechen ein Teil einer Leistung, die von einem Signalgenerator abgegeben und von einem Empfänger aufgenommen wird, wobei der Teil unabhängig von dem Werkstück und/oder dem georteten Objekt ist. Unter einem "Signal" soll insbesondere eine zur Ortung verwendete Leistung verstanden werden. Erfindungsgemäß soll unter dem Begriff "kompensieren" verstanden werden, dass das Kompensationsmittel einen Einfluss zumindest des Übersprechens auf ein an dem Empfänger ankommendes Signal wesentlich reduziert. Durch die erfindungsgemäße Ausgestaltung der Ortungsvorrichtung kann eine konstruktiv besonders einfache und zuverlässige Auswertung eines empfangenen Signals erreicht werden.

In einer weiteren Ausgestaltung wird vorgeschlagen, dass zumindest eine der Antennen planar aufgebaut ist. Vorzugsweise sind zumindest die erste und die zweite Antenne, vorteilhaft zumindest vier Antennen, planar aufgebaut. Vorteilhaft sind die Antennen zumindest teilweise einstückig ausgebildet, und zwar weisen die Antennen besonders vorteilhaft eine gemeinsame Massefläche und/oder bevorzugt ein einstückig ausgebildetes Dielektrikum auf. Unter einer "planar aufgebauten Antenne" soll insbesondere eine Antenne verstanden werden, die zumindest einen Strahler aufweist, der insbesondere zumindest im Wesentlichen aus einer flachen leitenden Schicht besteht. Vorteilhaft weist die Schicht eine Dicke von weniger als 2 mm, bevorzugt weniger als 0,5 mm, besonders bevorzugt weniger als 0,1 mm, auf. Vorzugsweise ist ein Verhältnis zwischen einer maximalen Ausdehnung des Strahlers und der Dicke der Schicht größer als 5, vorteilhaft größer als 10, besonders vorteilhaft größer als 20. Vorteilhaft weist der Strahler eine Fläche auf einer Ebene auf, die größer als 100 mm², vorteilhaft größer als 250 mm², ist. Vorzugsweise weist die Antenne zwei leitende Schichten auf, von denen wenigstens eine den Strahler bildet. Vorzugsweise erstrecken sich die Schichten entlang unterschiedlicher, insbesondere paralleler Ebenen. Vorteilhaft sind die Schichten weniger als eine viertel Wellenlänge, vorteilhaft weniger als eine zehntel Wellenlänge, des Sendesignals voneinander beabstandet angeordnet. Vorzugsweise weist die planare Antenne ein Dielektrikum auf, das insbesondere zwischen den Schichten angeordnet ist. Vorteilhaft verbindet das Dielektrikum die Schichten fest miteinander. Bevorzugt ist die planar aufgebaute Antenne zumindest teilweise von einer insbesondere geätzten Leiterplatte gebildet. Alternativ oder zusätzlich könnte ein Isolator, beispielsweise ein Gehäuseteil, mit einer leitenden Fläche beschichtet sein. Hierfür sind verschiedene, dem Fachmann als sinnvoll erscheinende Verfahren denkbar, wie beispielsweise eine PVD-Beschichtung, eine CVD-Beschichtung, eine Lackierung, ein Rotationsbeschichtung, ein gasdynamisches Pulverbeschichten und/oder eine Kathodenzerstäubungs-Beschichtung. Die leitende Fläche ist vorteilhaft aus einem Metall gebildet, könnte aber auch aus einem anderen organischen oder anorganischen Stoff, wie beispielsweise Indium-Zinn-Oxid, gebildet sein. Durch den planaren Aufbau ist die Antenne besonders platzsparend und preiswert ausgeführt. Zudem kann mit geringem Aufwand eine vorteilhafte Richtwirkung erzielt werden.

Des Weiteren wird vorgeschlagen, dass zumindest eine der Antennen symmetrisch gespeist ist, wodurch konstruktiv einfach ein geringes Übersprechen und insbesondere ein vorteilhafter Richtbereich erreicht werden können. Unter einer "symmetrisch gespeisten Antenne" soll insbesondere einen Antenne verstanden werden, die dazu vorgesehen ist, mit zwei amplitudengleichen, gegenphasigen Teilsignalen, insbesondere gegenüber einer Massefläche, gespeist das Signal abzustrahlen und /oder zu empfangen. Vorzugsweise weist die Antenne eine Balun auf, der dazu vorgesehen ist, die Antennen anzupassen. Vorzugsweise ist der Balun als Microstip-Bauteil ausgebildet. Alternativ könnten die Antennen unsymmetrisch gespeist sein. Vorzugsweise sind zumindest die erste und die zweite Antenne symmetrisch gespeist.

Ferner wird vorgeschlagen, dass zumindest eine der Antennen dazu vorgesehen ist, schmalbandig zu senden und/oder zu empfangen, wodurch eine konstruktiv besonders einfache Signalerzeugung und Signalverarbeitung, und insbesondere geringe rechtliche Zulassungsvoraussetzungen erreicht werden können. Insbesondere soll unter dem Begriff "schmalbandig" mit einer Bandbreite, insbesondere einer 3-dB Bandbreite, kleiner als 10 %, vorteilhaft kleiner als 5 %, besonders vorteilhaft kleiner als 1 % einer Mittenfrequenz verstanden werden. Vorzugsweise zumindest die erste und die zweite Antenne dazu vorgesehen, schmalbandig zu senden und/oder zu empfangen. Vorteilhaft weist die Ortungseinheit einen Signalgenerator auf, der bei einem Betrieb ein insbesondere schmalbandiges Signal erzeugt. Vorzugsweise liegt eine Mittenfrequenz des Signals in einem ISM-Band (Industrial, Scientific and Medical Band; ITU-R Regelungen 5.138 und 5.150). Besonders bevorzugt liegt die Mittenfrequenz zwischen 2,400 GHz und 2,500 GHz. Alternativ könnte die Antenne dazu vorgesehen sein, breitbandig und/oder auf mehreren Frequenzen schmalbandig zu senden und/oder zu empfangen.

Zudem wird vorgeschlagen, dass die zweite Antenne dazu vorgesehen ist, das Signal in einer von einer Polarisation der ersten Antenne unterschiedlichen zweiten Polarisation zu empfangen, wodurch konstruktiv besonders einfach eine Polarisationsänderung eines reflektierten Signals durch ein Objekt erfasst werden kann. Unter einer "Polarisation" soll insbesondere eine Ausrichtung einer elektrischen Feldkomponente eines elektromagnetischen Felds einer Antenne, insbesondere relativ zu einer Ausrichtung eines elektromagnetischen Felds einer anderen Antenne, bei einem Betrieb verstanden werden. Vorzugsweise sind die erste Antenne und die zweite Antenne linear polarisiert. Alternativ könnten die Antennen zirkular polarisiert sein. Insbesondere sollen unter "unterschiedlichen Polarisation" Polarisationen verstanden werden, deren elektrische Feldkomponenten bei einem Betrieb einen Winkel zueinander aufweisen, der insbesondere größer als 30 Grad, vorteilhaft größer als 60 Grad, besonders vorteilhaft zumindest im Wesentlichen 90 Grad ist.

Weiterhin wird vorgeschlagen, dass die Ortungseinheit zumindest drei Antennen, vorteilhaft zumindest vier Antennen, mit unterschiedlichen Polarisationen aufweist, wodurch konstruktiv einfach eine besonders zuverlässige Erfassung eines Objekts durch eine Polarisationsänderung eines reflektierten Signals möglich ist. Vorzugsweise beträgt ein Winkel zwischen zwei im Winkel benachbarten Polarisationen zumindest im Wesentlichen 45 Grad. Vorteilhaft weist die Ortungseinheit Antennen mit einer 0 Grad, einer 45 Grad, einer 90 Grad und einer 135 Grad Polarisation auf. Vorteilhaft liegt zwischen einer in wenigstens einem Betriebsmodus sendenden Antenne und einer gleichzeitig empfangenen Antenne ein Winkel von zumindest im Wesentlichen 90 Grad.

In einer vorteilhaften Ausbildung der Erfindung wird vorgeschlagen, dass die Ortungsvorrichtung eine Recheneinheit aufweist, wobei die Antennen unterschiedliche Richtbereiche aufweisen und die Recheneinheit dazu vorgesehen ist, aus insbesondere empfangenen Signalen der Antennen und Kenngrößen der Richtbereiche zumindest eine Information über eine Position eines Objektes zu ermitteln, durch mit besonders wenig Aufwand eine einfache Positionsbestimmung eines Objekts möglich ist. Unter einer "Recheneinheit" soll insbesondere ein Controller mit einem Prozessor, einer Speichereinheit, und/oder ein in der Speichereinheit gespeichertes Betriebs-, Steuer- und/oder Berechnungsprogramm verstanden werden. Vorzugsweise ist die Recheneinheit als ein digitaler Signalprozessor ausgebildet. Alternativ oder zusätzlich könnte die Recheneinheit als ein RISC-Controller ausgebildet sein. Vorzugsweise ist die Recheneinheit zumindest teilweise einstückig mit einer Recheneinheit ausgebildet, die einen Antriebsmotor einer Handwerkzeugmaschine, insbesondere der Stich- und/oder Säbelsäge, steuert. Alternativ könnten die Recheneinheiten getrennt ausgebildet sein und insbesondere in zumindest einem Betriebsmodus miteinander, insbesondere über analoge Signale, über binäre Signale und/oder vorteilhaft über einen Datenbus, kommunizieren. Unter einem "Richtbereich" soll insbesondere ein Bereich verstanden werden, in den zumindest eine Antenne bei einem Betrieb sendet und/oder aus dem zumindest eine Antenne bei einem Betrieb empfängt. Vorzugsweise ist der Richtbereich als ein innerhalb eines 3 dB Öffnungswinkels der Antenne angeordneter Raum ausgebildet. Unter einer "Kenngröße eines Richtbereichs" soll insbesondere eine Information verstanden werden, die eine räumliche Anordnung des Richtbereichs beschreibt, wie beispielsweise eine Antennenanordnung und/oder eine Antennenausrichtung. Unter einer "Information über eine Position eines Objekts" soll wenigstens eine Information verstanden werden, die eine zumindest teilweise Anordnung des Objekts in einen Schnittbereich von zwei Richtbereichen beschreibt. Unter einem "Objekt" soll insbesondere ein von einem Werkstück unterschiedliches Objekt verstanden werden, das vor einer Bearbeitung geschützt werden soll, wie beispielsweise ein Körperteil, eine elektrische Leitung, eine Wasserleitung, ein hinter dem Werkstück angeordneter Balken und/oder andere, dem Fachmann als sinnvoll erscheinende Objekte. Vorzugsweise weist das Objekt andere physikalische Eigenschaften als das Werkstück auf.

In einer weiteren Ausgestaltung wird vorgeschlagen, dass die Ortungseinheit dazu vorgesehen ist, Objekte innerhalb eines Werkstücks und Objekte außerhalb des Werkstücks zu erfassen, wodurch ein besonders umfassender Schutz möglich ist. Unter einem "Objekte innerhalb eines Werkstücks" soll insbesondere ein Objekt verstanden werden, das getrennt von dem Werkstück ausgebildet ist und zumindest teilweise von diesem umschlossen ist. Insbesondere sollen unter "Objekten außerhalb des Werkstücks" Objekte verstanden werden, die vor oder vorteilhaft hinter dem Werkstück angeordnet sind. Vorzugsweise sind Objekten außerhalb des Werkstücks von diesem unumschlossen. Die Ortungseinheit ist dazu vorgesehen, Objekte zu erfassen, die von dem Werkstück mehr als 1 mm, vorteilhaft mehr als 5 mm, beabstandet angeordnet sind. Unter einem "Werkstück" soll insbesondere eine von einem Einsatzwerkzeug verarbeitbare Einheit verstanden werden, wie insbesondere eine Platte aus Kunststoff und/oder vorteilhaft Holz. Unter "beabstandet" soll insbesondere verstanden werden, das jeder Punkt des Objektes eine Entfernung zu jedem Punkt des Werkstücks aufweist, die insbesondere größer als 1 mm ist.

Des Weiteren wird vorgeschlagen, dass die Ortungsvorrichtung ein Werkstückführungsmittel mit einer Werkstückauflageebene umfasst, wobei die Ortungseinheit einen Ortungsraum aufweist, der die Werkstückauflageebene durchdringt, wodurch bei einem vorteilhaften Werkzeugaufbau ein besonders umfassender Schutz erreicht werden kann. Vorzugsweise ist der Ortungsraum in einer Hauptarbeitsrichtung gesehen zumindest teilweise hinter dem Werkstückführungsmittel angeordnet, und zwar vorteilhaft auf einer zu der Hauptarbeitsrichtung parallelen Geraden, die den Ortungsraum und das Werkstückführungsmittel schneidet. Alternativ oder zusätzlich könnte das Werkstückführungsmittel von dem ortenden Signal durchdringbar ausgebildet sein. Vorteilhaft sendet zumindest eine der Antennen ein Durchdringungssignal aus. Unter einem "Durchdringungssignal" soll insbesondere ein Signal verstanden werden, das dazu vorgesehen ist, ein zumeist mit der Handwerkzeugmaschine verwendetes Werkstück, insbesondere ein Holzbrett, zumindest teilweise von einer Außenseite zu einer anderen Außenseite zu durchdringen. Vorzugsweise ist das Durchdringungssignal dazu vorgesehen, zumindest ein Werkstück mit einer Permittivität zwischen 1,5 und 4 und mit einer Dicke zwischen 0,5 mm und 50 mm, vorteilhaft zwischen 2 mm und 25 mm, zur Ortung zu durchdringen. Unter einem "Werkstückführungsmittel" soll insbesondere ein Mittel verstanden werden, dass dazu vorgesehen ist, zumindest eine Einsatzwerkzeugbefestigung relativ zu dem Werkstück bewegbar an dem Werkstück abzustützen, und zwar vorteilhaft mit einer Kraft in einer Richtung, die parallel zu einer motorgetriebenen Bewegung der Einsatzwerkzeugbefestigung ausgerichtet ist. Insbesondere soll unter dem Begriff "Werkstückauflageebene" eine Ebene verstanden werden, die durch eine Werkstückauflagefläche der Handwerkzeugmaschine aufgespannt wird, das heißt durch sie verläuft und parallel zu ihr ausgerichtet ist. Vorzugsweise berührt die Werkstückauflagefläche bei einem Arbeitsvorgang das Werkstück. Vorzugsweise ist die Werkstückauflageebene parallel zu der Hauptarbeitsrichtung ausgerichtet. Vorteilhaft ist die Werkstückauflageebene senkrecht zu einer motorgetriebenen Arbeitsbewegung der Einsatzwerkzeugbefestigung ausgerichtet. Unter einem "Ortungsraum" soll insbesondere ein Raum verstanden werden, in dem die Ortungsvorrichtung eine Ortung vornimmt. Vorzugsweise ist der Ortungsraum durch eine Ausrichtung und Ausgestaltung der Antennen, durch eine Leistung des ausgesendeten Signals, und durch eine Signalverarbeitung des empfangenen Signals definiert. Vorteilhaft erstreckt sich der Ortungsraum in eine Richtung senkrecht zu der Werkstückauflageebene über die Werkstückauflageebene hinaus, und zwar vorteilhaft zumindest auf einer der Antenne abgewandten Seite der Werkstückauflageebene. Insbesondere erstreckt sich der Ortungsraum mehr als 1 cm, vorteilhaft mehr als 2 cm besonders vorteilhaft mehr als 5 cm über die Werkstückauflageebene hinaus.

Ferner wird vorgeschlagen, dass der Ortungsraum der Ortungseinheit auf einer der Antenne zugewandten Seite der Werkstückauflageebene eine Erstreckung größer als 1 cm, vorteilhaft größer als 2 cm, besonders vorteilhaft größer als 5 cm, senkrecht zu der Werkstückauflageebene aufweist, wodurch ein vorteilhafter Schutz, insbesondere eines Bedieners erreicht werden kann. Vorzugsweise grenzt die der Antenne zugewandten Erstreckung des Ortungsraums zumindest teilweise an die Werkstückauflageebene an. Alternativ oder zusätzlich könnte die der Antenne zugewandten Erstreckung des Ortungsraums zumindest teilweise an das Werkstückführungsmittel angrenzen. Vorzugsweise reicht der Ortungsraum in einer Richtung senkrecht zu der Werkstückauflageebene wenigstens bis zu einem unteren Totpunkt eines unteren Endes eines Bearbeitungsbereichs des Einsatzwerkzeugs der Handwerkzeugmaschine. Vorzugsweise reicht der Ortungsraum in einer Richtung senkrecht zu der Werkstückauflageebene wenigstens bis zu einem oberen Totpunkt eines oberen Endes des Bearbeitungsbereichs des Einsatzwerkzeugs.

Zudem wird vorgeschlagen, dass die Antenne in Hauptarbeitsrichtung gesehen hinter einer Einsatzwerkzeugbefestigung angeordnet ist, wodurch besonders einfach ein Bereich überwacht werden kann, auf den das Einsatzwerkzeug als nächstes wirkt. Alternativ oder zusätzlich könnte ein Richtbereich der Antenne auf einen Bereich vor dem Einsatzwerkzeug ausgerichtet sein. Unter einer "Hauptarbeitsrichtung" soll insbesondere eine Richtung verstanden werden, in die dem Einsatzwerkzeug einen Arbeitsfortschritt erzielt. Vorteilhaft bewegt ein Bediener zumindest die Ortungseinheit wenigstens bei einem Arbeitsvorgang in die Hauptarbeitsrichtung. Unter "in Hauptarbeitsrichtung gesehen hinter" soll insbesondere verstanden werden, das entlang der Hauptarbeitsrichtung zuerst das Einsatzwerkzeug und dann die Antenne, insbesondere auf senkrecht zur Hauptarbeitsrichtung ausgerichteten Ebenen, angeordnet sind.

Des Weiteren wird vorgeschlagen, dass die Ortungseinheit dazu vorgesehen ist, zumindest während einer Werkstückbearbeitung nur eine Änderung eines empfangenen Signals auszuwerten, wodurch ein besonders einfach Auswertung und ein besonders einfacher Aufbau der Ortungseinheit möglich sind. Vorzugsweise wertet die Recheneinheit die Änderung des empfangenen Signals aus. Unter der Wendung "während einer Werkstückbearbeitung" soll insbesondere während eines Bewegungsablaufs, der einen Werkstückabtrag verursacht, verstanden werden. Vorteilhaft bewegt der Bediener zumindest die Antennen während einer Werkstückbearbeitung relativ zu dem Werkstück. Insbesondere soll unter der Wendung "eine Änderung eines empfangenen Signals auswerten" verstanden werden, dass die Ortungseinheit nur lediglich einen Unterschied zwischen dem aktuell empfangenen Signal und einem zuvor empfangenen Signal berechnet und den Unterschied auswertet. Vorzugsweise vergleicht die Ortungseinheit den Unterschied mit zumindest einem Schwellwert. Insbesondere erfasst die Ortungseinheit keine absoluten Laufzeiten eines empfangen Signals, beispielsweise zu einer Bestimmung einer Entfernung.

Ferner wird vorgeschlagen, dass die Ortungseinheit zwei unterschiedliche Reaktionsbereiche definiert, wodurch eine besonders komfortable und trotzdem wirkungsvolle Reaktion auf eine Situation möglich ist. Unter einer "Reaktionsbereiche" soll insbesondere ein Raum verstanden werden, in dem ein Objekt bei einem Eindringen eine Reaktion zumindest der Ortungseinheit verursacht. Vorteilhaft ist ein Reaktionsbereich als ein Warnbereich definiert. Vorzugsweise erfolgt bei einem Eindringen eines Objektes in diesen Reaktionsbereich eine insbesondere optische, akustische und/oder taktile Warnung an den Bediener, beispielsweise durch eine Vibration eines Haupthandgriffs. Vorteilhaft ist ein Reaktionsbereich als ein Schutzbereich definiert. Vorzugsweise erfolgt bei einem Eindringen eines Objektes in diesen Reaktionsbereich eine Schutzmaßnahme, wie beispielsweise ein Stopp eines Einsatzwerkzeugs und/oder ein anderer, dem Fachmann als sinnvoll erscheinender Schutz.

Zudem geht die Erfindung aus von einer Handwerkzeugmaschine, insbesondere einer Stich- und/oder Säbelsäge, mit einer erfindungsgemäßen Ortungsvorrichtung, wodurch eine insbesondere sichere Handwerkzeugmaschine konstruktiv besonders einfach erreicht werden kann. Insbesondere soll unter dem Begriff "Handwerkzeugmaschine" ein handgeführtes, motorbetriebenes Werkzeug verstanden werden. Unter einer "Stich- und/oder Säbelsäge" soll insbesondere eine Säge verstanden werden, die dazu vorgesehen ist, in ein Werkstück einzustechen. Vorteilhaft weist die Stich- und/oder Säbelsäge einen Antriebsmotor und die Einsatzwerkzeugbefestigung auf. Vorteilhaft befestigt die Einsatzwerkzeugbefestigung bei einem Betrieb das Einsatzwerkzeug einseitig. Vorzugsweise ist das Einsatzwerkzeug dazu vorgesehenen, Kurven zu sägen. Alternativ könnte die Handwerkzeugmaschine als eine andere dem Fachmann als sinnvoll erscheinende Handwerkzeugmaschine, wie insbesondere als eine Bohrmaschine, ein Bohrhammer, eine Säge, ein Hobel, ein Schrauber, eine Fräse, ein Schleifer, ein Winkelschleifer, ein Gartengerät und/oder als ein Multifunktionswerkzeug ausgebildet sein. Vorzugsweise ist die Ortungsvorrichtung in die Handwerkzeugmaschine integriert. Alternativ könnte die Ortungsvorrichtung ein Verbindungsmittel aufweisen, das dazu vorgesehen ist, eine von einem Bediener trennbare wirkungsmäßige Verbindung zu der Handwerkzeugmaschine herzustellen. Somit könnte die Ortungsvorrichtung als ein Anbauteil und/oder Zubehörteil ausgebildet sein.

### Zeichnung

Weitere Vorteile ergeben sich aus der folgenden Zeichnungsbeschreibung. In der Zeichnung sind sechs Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Handwerkzeugmaschine, die als Stichsäge ausgebildet ist, mit einer Ortungsvorrichtung, die zwei Antennen aufweist,
- Fig. 2: die Antennen, einen Signalgenerator, einen Empfänger und ein Kompensationsmittel der Ortungsvorrichtung aus Figur 1 in einer schematischen Darstellung,
- Fig. 3: die Antennen der Ortungsvorrichtung aus Figur 1 in einer Draufsicht,
- Fig. 4: die Antennen der Ortungsvorrichtung aus Figur 1 in einer Seitenansicht,
- Fig. 5: eine erfindungsgemäße Handwerkzeugmaschine, die als Säbelsäge ausgebildet ist,
- Fig. 6: ein weiteres Ausführungsbeispiel der Antennen aus Figur 1, die als kreuzförmig ausgebildeter Dipol mit Halterung ausgebildet sind,
- Fig. 7: die Antenne aus Figur 6 ohne Halterung dargestellt,
- Fig. 8: vier unsymmetrisch gespeiste Antennen mit einem gemeinsamen runden Strahler,
- Fig. 9: zwei unsymmetrisch gespeiste Antennen mit jeweils einem Strahler,
- Fig. 10: vier unsymmetrisch gespeiste Antennen mit einem gemeinsamen runden Strahler,
- Fig. 11: acht unsymmetrisch gespeiste Antennen mit vier Strahlern und
- Fig. 12: ein erfindungsgemäßes Handortungsgerät mit einer Ortungsvorrichtung.

### Beschreibung der Ausführungsbeispiele

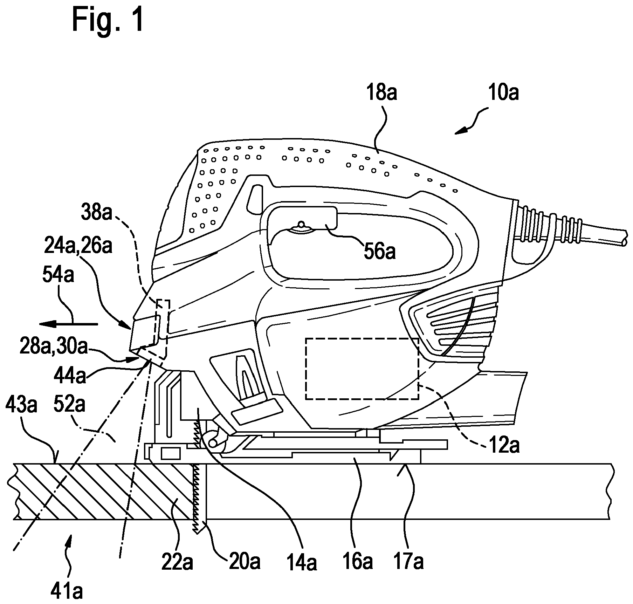

Figur 1 zeigt ein Handwerkzeug 10a, und zwar eine Handwerkzeugmaschine. Das Handwerkzeug 10a ist als eine Stichsäge ausgebildet. Das Handwerkzeug 10a weist einen Antriebsmotor 12a, eine Einsatzwerkzeugbefestigung 14a, ein Werkstückführungsmittel 16a mit einer Werkstückauflagefläche 17a und einen Haupthandgriff 18a auf. Der Antriebsmotor 12a treibt bei einem Arbeitsvorgang die Einsatzwerkzeugbefestigung 14a an, und zwar oszillierend. Zudem treibt der Antriebsmotor 12a ein Einsatzwerkzeug 20a bei einem Betrieb pendelnd an. Die Einsatzwerkzeugbefestigung 14a befestigt in einem betriebsbereiten Zustand das Einsatzwerkzeug 20a. Das Einsatzwerkzeug 20a ist als ein Stichsägeblatt ausgebildet. Das Handwerkzeug 10a gleitet bei einem Arbeitsvorgang, von einem Bediener bewegt, auf der Werkstückauflagefläche 17a über ein Werkstück 22a. Der Haupthandgriff 18a ist auf einer dem Werkstückführungsmittel 16a abgewandten Seite des Handwerkzeugs 10a angeordnet.

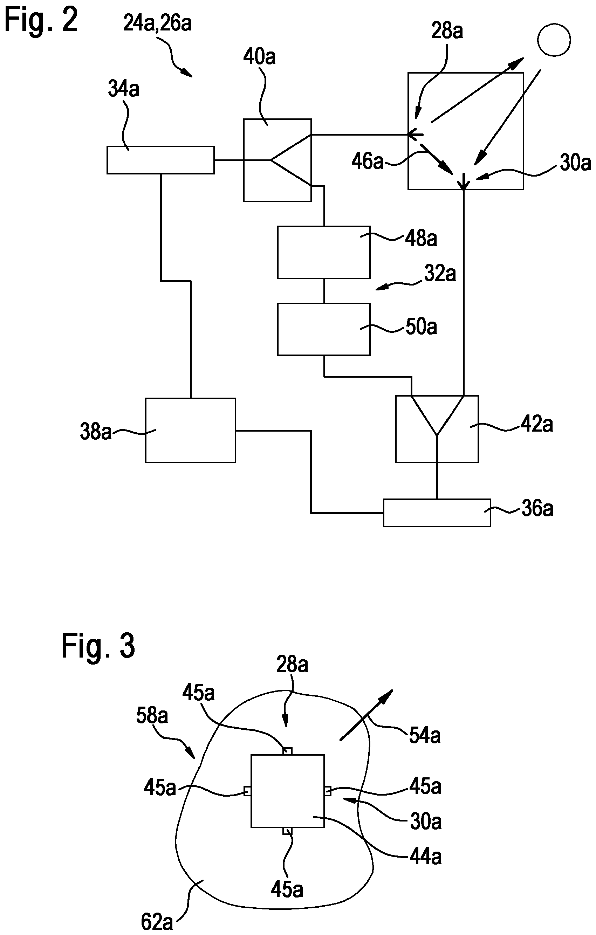

Zudem weist das Handwerkzeug 10a eine in Figur 2 schematisch dargestellte Ortungsvorrichtung 24a auf. Die Ortungsvorrichtung 24a umfasst eine Ortungseinheit 26a mit einer ersten Antenne 28a, einer zweiten Antenne 30a, einem Kompensationsmittel 32a, einem Signalgenerator 34a, einem Empfänger 36a, einer Recheneinheit 38a, einem Splitter 40a und einem Kombinierer 42a. Nicht näher dargestellt sind Filter, Impedanzwandler, Baluns, Verstärker, eine Energieversorgung und andere, dem Fachmann als sinnvoll erscheinende Einheiten der Ortungseinheit 26a. Der Signalgenerator 34a, der Empfänger 36a, die Recheneinheit 38a, der Splitter 40a und der Kombinierer 42a sind auf einem Chip integriert ausgebildet. Altarnativ könnten einzelne der Funktionseinheiten 34a-42a von den anderen der Funktionseinheiten 34a-42a konstruktiv getrennt sein.

Wie insbesondere in Figur 1 dargestellt ist, weist die Ortungseinheit 26a einen Ortungsraum 41a auf, der eine Werkstückauflageebene 43a durchdringt. Dazu erzeugt der Signalgenerator 34a ein schmalbandiges, hochfrequentes Signal, und zwar mit 2,4 GHz. Die Antennen 28a, 30a senden das Signal gerichtet in den Ortungsraum 41a aus. Die Recheneinheit 38a regelt eine Amplitude des Signals. Zusätzlich passt die Recheneinheit 38a einen Sendezeitraum an eine Bewegung der Einsatzwerkzeugbefestigung 14a an, wodurch Störungen durch das Einsatzwerkzeug minimiert werden können. Der Ortungsraum 41a weist auf einer der Antennen 28a, 30a zugewandten Seite der Werkstückauflageebene 43a eine Erstreckung senkrecht zu der Werkstückauflageebene auf, die größer als 5 cm ist. Die Antennen 28a, 30a sind in einer Ortungsrichtung von der Werkstückauflageebene 43a beabstandet angeordnet.

Die Recheneinheit 38a ist einstückig mit einer Recheneinheit ausgebildet, die den Antriebsmotor 12a steuert und/oder regelt. Die Ortungsvorrichtung 24a bezieht während eines Betriebs eine Betriebsenergie aus einer nicht näher dargestellten Energiequelle des Antriebsmotors 12a. Alternativ könnte die Ortungsvorrichtung 24a eine eigenständige Energiequelle, insbesondere einen Akku und/oder eine Batterie aufweisen.

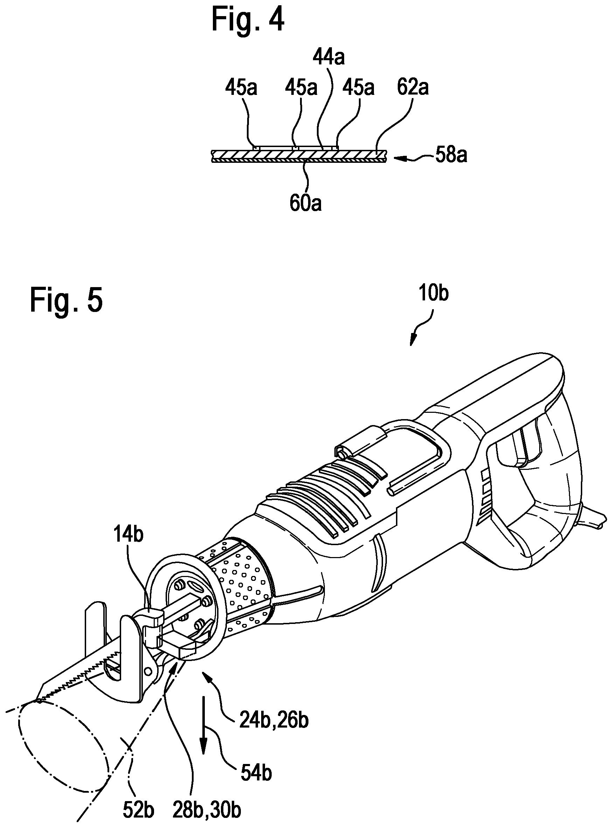

Wie die Figuren 3 und 4 zeigen weisen die Antennen 28a, 30a einen gemeinsamen Strahler 44a auf. Der Strahler 44a ist als eine quadratische, elektrisch leitende Fläche ausgebildet. Die Antennen 28a, 30a weisen jeweils zwei Kontaktstellen 45a auf, die den Strahler 44a kontaktieren. Die Kontaktstellen 45a sind jeweils an gegenüberliegenden Seiten des Strahler 44a angeordnet. Sie sind als Durchkontaktierungen ausgebildet und über Streifenleitungen angebunden. Die Antennen 28a speisen den Strahler 44a symmetrisch. Dazu weist jede Antenne 28a, 30a einen nicht näher dargestellten Balun auf. Die zweite Antenne 30a weist eine von der Polarisation der ersten Antenne 28a unterschiedliche Polarisation auf, und zwar unterscheitet sich die Polarisation um 90 Grad. Der Strahler 44a weist ein Übersprechen 46a zwischen der ersten Antenne 28a und der zweiten Antenne 30a auf. Der Strahler 44a ist so ausgerichtet, dass die Polarisationen der Antennen 28a, 30a einen Winkel von 45 Grad zu einer Hauptarbeitsrichtung 54a aufweisen.

Der Splitter 40a koppelt bei einem Ortungsvorgang zwischen dem Signalgenerator 34a und der ersten Antenne 28a einen Kompensationsteil aus einem Signal des Signalgenerators 34a aus. Der Kompensationsteil ist kleiner als das gesendete Signal, könnte aber auch gleich groß bzw. größer sein. Der Kompensationsteil durchläuft das Kompensationsmittel 32a. Bei einem Ortungsvorgang kombiniert der Kombinierer 42a zwischen der zweiten Antenne 30a und dem Empfänger 36a ein empfangenes Signal und den Kompensationsteil. Das empfangene Signal weist dabei das Übersprechen 46a auf.

Das Kompensationsmittel 32a weist ein Amplitudenstellglied 48a und ein Phasenstellglied 50a auf. Das Amplitudenstellglied 48a und das Phasenstellglied 50a sind einstellbar ausgebildet. Das Amplitudenstellglied 48a ist als ein Dämpfungsglied ausgebildet. Es könnte alternativ auch als ein Verstärker ausgebildet sein. Bei einer Kalibrierung wird das Amplitudenstellglied 48a so eingestellt, dass eine Amplitude des Kompensationsteils und eine Amplitude des Übersprechens 46a in dem Empfänger 36a gleich groß sind. Zudem wird bei einer Kalibrierung das Phasenstellglied 50a so eingestellt, das eine Phase des Kompensationsteils und eine Phase des Übersprechens 46a in dem Empfänger 36a um 180 Grad verschieden sind. Das Phasenstellglied 50a ist als eine Laufzeitleitung ausgebildet. Ein Amplitudenstellglied und ein Phasenstellglied könnten einstückig, beispielsweise als Vektormodulator, ausgebildet sein.

Das Kompensationsteil löscht das Übersprechen 46a in dem empfangenen Signal bevor dieses den Empfänger erreicht weitgehend aus. Die Kalibrierung des Kompensationsmittels 32a findet bei einer Produktion statt. Alternativ oder zusätzlich könnte eine Kalibrierung insbesondere kurz vor, während oder nach einem Arbeitsvorgang und/oder durch einen Bediener ausgelöst, beispielsweise durch eine Rückkopplung, erfolgen. Somit kompensiert das Kompensationsmittel 32a das Übersprechen 46a des Signals der ersten Antenne 28a auf die zweite Antenne 30a.

Die erste Antenne 28a sendet das Signal in einem Richtbereich 52a aus. Während des Arbeitsvorgangs bewegt der Bediener das Handwerkzeug 10a in der Hauptarbeitsrichtung 54a. Das Feld der ersten Antenne 28a durchdringt das Werkstück 22a in dem in Hauptarbeitsrichtung 54a gesehen hinter der Einsatzwerkzeugbefestigung 14a liegenden Richtbereich 52a. Zudem sind die Antennen 28a, 30a in der Hauptarbeitsrichtung 54a gesehen hinter der Einsatzwerkzeugbefestigung 14a angeordnet. Somit erfasst die Ortungseinheit 26a bei einer Ortung Objekte innerhalb des Werkstücks 22a und Objekte außerhalb des Werkstücks 22a.

Die zweite Antenne 30a empfängt in einer Polarisation veränderte Reflektionen des gesendeten Signals. Der Empfänger 36a ist als ein Analog-Digital-Wandler ausgebildet. Die Recheneinheit 38a wertet das empfangene Signal aus. Dazu bestimmt der Empfänger 36a eine Amplitude des empfangen Signals. Alternativ könnte die Recheneinheit 38a ein empfangenes Signal in Betrag und Phase auswerten. Dazu könnte der Empfänger als komplexer Empfänger, beispielsweise als IQ-Empfänger ausgebildet ein. In diesem Fall könnte die Recheneinheit 38a ein Kompensationsmittel in Form einer Rechenroutine aufweisen.

Die Recheneinheit 38a weist eine Rechenroutine auf, die bei einem Arbeitsvorgang, und zwar bei einer Bewegung zumindest der Antenne relativ zu einem Werkstück, eine Änderung des empfangenen Signals auswertet. Die Auswertung beginnt wenn die Recheneinheit 38a erkennt, dass ein Arbeitsvorgang beginnt. Dazu wertet die Recheneinheit 38a eine Leistungsaufnahme des Antriebsmotors 12a aus. Zu der Zeit könnte eine Kalibrierungen erfolgen. Die Recheneinheit 38a vergleicht in der Folge einen älteren Wert des empfangenen Signals mit einem aktuellen Wert des empfangenen Signals. Alternativ könnte die Recheneinheit 38a einen aktuellen Wert des empfangenen Signals mit einem durchschnittlichen und/oder gefilterten Wert des Signals vergleichen.

Wenn ein Unterschied zwischen den Werten einen Schwellwert überscheitet, löst die Recheneinheit 38a eine Reaktion aus. In diesem Ausführungsbeispiel warnt das Handwerkzeug 10a den Bediener optisch. Dazu schaltet die Recheneinheit 38a eine nicht näher dargestellte rote Leuchtdiode ein, die einen Bereich in Hauptarbeitsrichtung 54a gesehen hinter dem Einsatzwerkzug 20a beleuchtet. Die Recheneinheit 38a schaltet die Warnung aus, wenn der Unterschied zwischen den Werten den Schwellwert wieder unterschreitet. Alternativ oder zusätzlich zur Warnung könnte die Recheneinheit 38a die Einsatzwerkzeugbefestigung 14a, insbesondere nach einer Warnung, stoppen. Beispielsweise könnte die Recheneinheit 38a den Antriebsmotor 12a ausschalten, eine Kupplung zwischen dem Antriebsmotor 12a und der Einsatzwerkzeugbefestigung 14a öffnen, einen Pendelhub ausschalten, die Einsatzwerkzeugbefestigung 14a mittels des Antriebsmotors 12a aktiv stoppen und/oder eine Brems- und/oder Blockierfunktion auslösen. Wenn ein Bediener ein Bedienmittel 56a des Handwerkzeugs 10a betätigt könnte die Recheneinheit 38a eine Fortsetzung des Arbeitsvorgangs freigeben. Dabei könnte ein Hauptbedienmittel erneut betätigt werden oder das Handwerkzeug 10a könnte ein separates Bedienmittel zur Freigabe aufweisen. Alternativ könnte die Recheneinheit 38a nach einem Anheben des Handwerkzeugs 10a einen, Bearbeitungsvorgang freigeben.

Die Figuren 3 und 4 zeigen die beiden Antennen 28a, 30a. Die Antenne 28a, 30a sind planar aufgebaut. Dazu ist der Strahler 44a von einer leitenden Fläche auf einer Außenseite einer Leiterplatte 58a gebildet. Auf einer anderen Seite der Leiterplatte 58a ist eine Massefläche 60a angeordnet. Zwischen dem Strahler 44a und der Massefläche 60a weist die Leiterplatte 58a ein Dielektrikum 62a auf. Das Dielektrikum 62a verbindet den Strahler 44a und die Massefläche 60a mechanisch. Alternativ könnte zwischen dem Strahler 44a und der Massefläche 60a ein Luftschlitz angeordnet sein. Der Strahler 44a weist eine quadratische Form auf. Dadurch weist der Strahler 44a einen schmalbandigen Frequenzverlauf auf. Somit senden und/oder empfangen die Antennen 28a, 30a schmalbandig. Alternativ könnte der Strahler 44a eine rechteckige oder eine andere, dem Fachmann als sinnvoll erscheinende Form aufweisen.

In den Figuren 5 bis 12 sind weitere Ausführungsbeispiele insbesondere von Teilen der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In den Ausführungsbeispielen der Figuren 5 bis 12 ist der Buchstabe a durch die Buchstaben b bis g ersetzt.

Figur 5 zeigt ein Handwerkzeug 10b, das als eine Säbelsäge ausgebildet ist. Das Handwerkzeug 10b weist eine Ortungsvorrichtung 24b mit einer Ortungseinheit 26b auf. Die Ortungseinheit 26b umfasst zwei in dem Ausführungsbeispiel der Figuren 1 bis 4 beschriebene Antennen 28b, 30b. Ein Richtbereich 52b der Antennen 28b, 30b ist auch hier in Hauptarbeitsrichtung 54b hinter einer Einsatzwerkzeugbefestigung 14b angeordnet. Das Handwerkzeug 10b weist eine Haupterstreckung auf, die senkrecht zu der Hauptarbeitsrichtung 54b ausgerichtet ist.

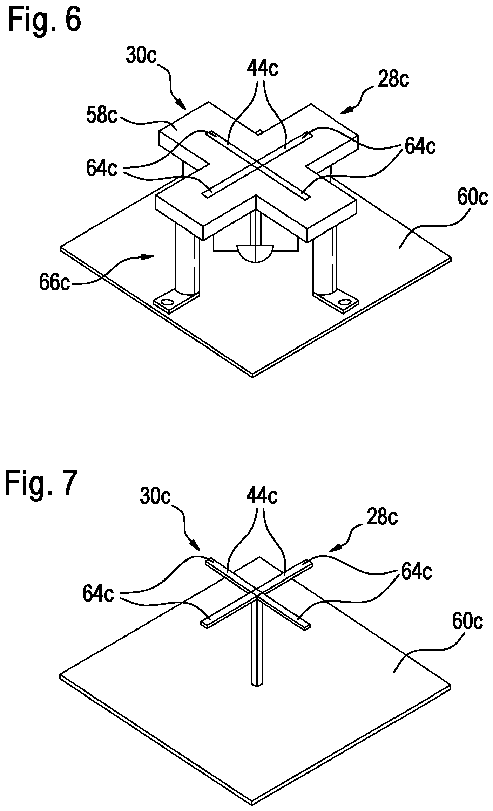

Die Figuren 6 und 7 zeigen zwei alternative Antenne 28c, 30c, die jeweils als Dipolantennen ausgebildet sind. Jede Antennen 28c, 30c weist Strahler 44c auf. Jeder Strahler 44c weist zwei parallel ausgerichtete Pole 64c auf. Zusammen bilden die Antennen 28c, 30c einen Kreuzdipol. Eine Massefläche 60c der Antennen 28c, 30c verursacht eine Richtwirkung, und zwar in eine von der Massefläche 60c zu den Strahlern 44c weisende Richtung. In Figur 5 ist ein Halter 66c der Antennen 28c, 30c dargestellt. Der Halter ist teilweise als eine Leiterplatte 58c ausgebildet, und zwar sind die Strahler 44c auf einer Leiterplatte angeordnet. Der Halter 66c ist aus einem dielektrischen Material gebildet. Er befestigt die Strahler 44c isolierend. Eine Länge der Strahler 44c, eine Breite der Strahler 44c, eine Form der Strahler 44c und ein Abstand der Strahler 44c von der Massefläche 60c ist von einer Frequenz und einer Bandbreite eines bei einem Betrieb gesendeten Signals abhängig. Die Antennen 28c, 30c sind symmetrisch gespeist.

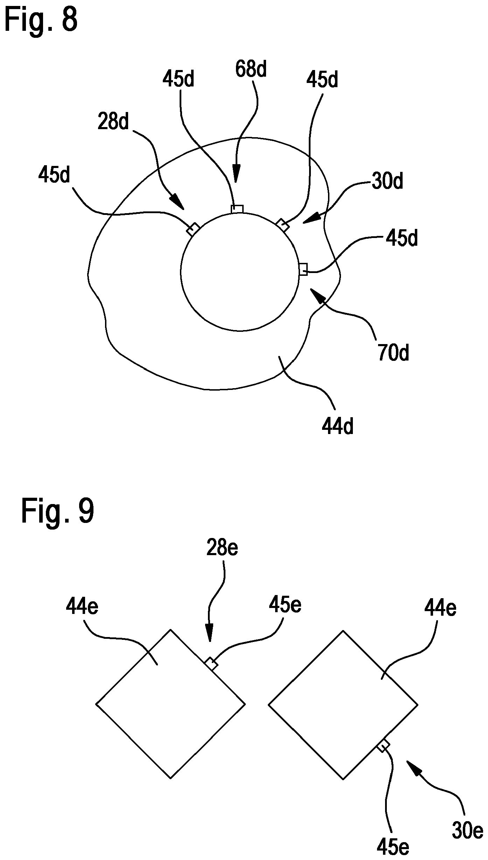

Figur 8 zeigt vier alternative Antennen 28d, 30d, 68d, 70d mit einem gemeinsamen Strahler 44d. Der Strahler 44d ist als eine kreisförmige leitende Fläche ausgebildet. Die Antennen 28d, 30d, 68d, 70d weisen jeweils eine Kontaktstellen 45a auf. Die Kontaktstellen 45d sind jeweils mit einem Winkel von 45 Grad zu der nächsten Kontaktstelle 45d angeordnet. Die Antennen 28d, 30d, 68d, 70d sind unsymmetrisch gespeist. Daraus ergeben sich zwei Antennenpaare mit jeweils zwei Antennen 28d, 30d; 68d, 70d, die jeweils einen Winkel von 90 Grad zwischen ihren Polarisationen aufweisen. Die Antennenpaare weisen einen Winkel von 45 Grad zwischen ihren Polarisationen auf. Somit weist eine Ortungseinheit vier Antennen 28d, 30d, 68d, 70d mit unterschiedlichen Polarisationen auf.

Jeweils eine der Antenne 28d, 68d eines Antennenpaares ist mit einem Signalgenerator verbunden. Jeweils eine der Antenne 30d, 70d eines Antennenpaares ist mit einem Empfänger verbunden. Die Antennen 28d, 68d senden abwechselt ein Signal aus. Dabei empfängt jeweils die Antenne 30d, 70d, die einen Winkel von 90 Grad zu der sendenden Antenne 28d, 68d aufweist. Durch diesen Aufbau und diesen Betrieb können auch Objekte geortet werden, die eine Ausrichtung und/oder Form aufweisen, die bei einer der sendenden Antennen eine Polarisation eines reflektierenden Signals unverändert lassen.

Figur 9 zeigt zwei Antennen 28e, 30e, die mittels jeweils einer Kontaktstelle 45e unsymmetrisch gespeist sind. Die Antennen 28e, 30e weisen getrennt ausgebildete Strahler 44e auf. Eine der Antennen 28e ist mit einem Signalgenerator verbunden. Eine der Antennen 30e ist mit einem Empfänger verbunden. Die Antennen 28e, 30e können nur Objekte orten, die einem Richtbereich von beiden Antennen 28e, 30e angeordnet sind, wodurch ein Ortungsraum vorteilhaft, insbesondere von den Antennen beabstandet, angeordnet werden kann.

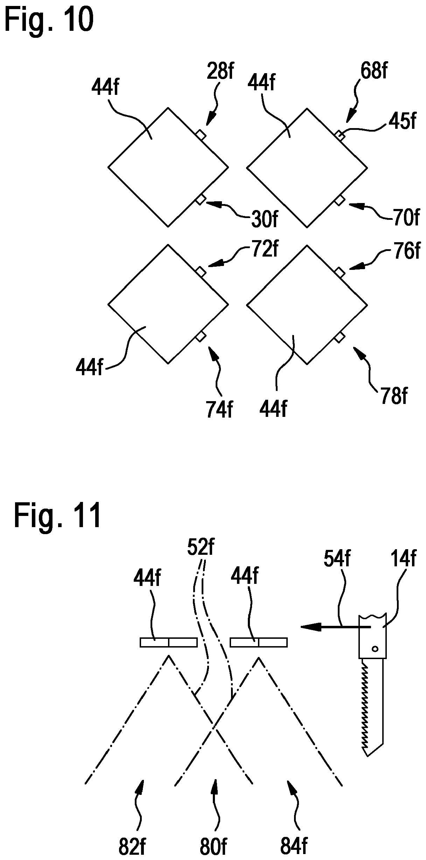

Die Figur 10 zeigt acht Antennen 28f, 30f, 68 - 78f. Jeweils zwei Antennen 28f, 30f; 68f, 70f; 72f, 74f; 76f, 78f weisen einen gemeinsamen Strahler 44f und einen Polarisationsunterschied von 90 Grad auf. Die Antennen 28f, 30f, 68 - 78f sind mittels einer Kontaktstelle 45f unsymmetrisch gespeist (nur einmal mit einem Bezugszeichen versehen). Jeweils vier der Antennen 28f, 30f, 68f-78f weisen eine gleiche Polarisation auf. Die Antennen 28f, 68f, 72f, 76f mit gleicher Polarisation senden bei einem Betrieb und die anderen Antennen 30f, 70f, 74f, 78f mit gleicher Polarisation empfangen bei einem Betrieb. Die Antennen 28f, 30f, 68f-78f sind phasengleich kontaktiert. Dadurch ergibt sich ein besonders schmaler Öffnungswinkel eines gemeinsamen Richtbereichs der Antennen 28f, 30f, 68f-78f. Alternativ könnten die Antennen insbesondere einstellbar phasenverschoben kontaktiert sein, wodurch unterschiedliche Winkel und/oder Ausrichtungen eines Richtbereichs erreicht werden können. Zudem wäre dieses Prinzip alternativ mit zwei oder mehr Antennen möglich.

Die bei einem Betrieb empfangenden Antennen 30f, 70f, 74f, 78f sind jeweils mit einem nicht näher dargestellten Empfänger verbunden. Dadurch können, wie insbesondere in Figur 11 dargestellt, konstruktiv einfach Informationen über eine Position eines Objekts bestimmt werden. Figur 1 zeigt schematisch eine Seitenansicht zweier Strahler 44f und zu den Strahlern 44f gehörenden Richtbereiche 52f. Die Strahler 44f und somit die Antennen 28f, 30f, 68f-78f weisen unterschiedliche Richtbereiche 52f auf. Die Richtbereiche 52f überschneiden sich in einem Überschneidungsbereich 80f. Alternativ könnten die bei einem Betrieb empfangenden Antennen 30f, 70f, 74f, 78f mit einem gemeinsamen Empfänger verbunden sein, wodurch konstruktiv einfach eine Richtwirkung der vier Antennen genutzt werden kann.

Wenn ein reflektiertes Signal von einem Strahler 44f Änderungen aufweist, dringt in dessen Richtbereiche 52f ein Objekt, durch eine Bewegung der Antennen 28f, 30f, 68f-78f relativ zu dem Objekt, ein. Wenn ein reflektiertes Signal eines anderen Strahlers 44f Änderungen aufweist, dringt in dessen Richtbereiche 52f das Objekt ein. Wenn von dem Objekt reflektierte Signale der beiden Strahlern 44f verändert sind, ist das Objekt im Überschneidungsbereich 80f angeordnet. Durch An- und Abschalten einzelner sendender Antennen 28f, 68f, 72f, 76f ist eine weitere Positionsbestimmung möglich. Eine in dem ersten Ausführungsbeispiel beschriebene Recheneinheit weist eine Rechenroutine auf, die aus den Signalen der Antennen und Kenngrößen der Richtbereiche 52f der Antennen 28f, 30f, 68f-78f Informationen über eine Position eines Objektes ermittelt. Dieses Prinzip wäre alternativ mit zwei Antennen oder mehr Antennen möglich.

Die Recheneinheit definiert zwei unterschiedliche Reaktionsbereiche 82f, 84f. Die Reaktionsbereiche 82f, 84f sind in Hauptarbeitsrichtung 54f gesehen hintereinander, hinter einer Einsatzwerkzeugbefestigung 14f angeordnet. Die Recheneinheit warnt den Bediener, wenn ein Objekt in dem Reaktionsbereiche 82f angeordnet ist, der weiter von der Einsatzwerkzeugbefestigung 14f beabstandet ist. Die Recheneinheit stoppt die Einsatzwerkzeugbefestigung 14f, wenn ein Objekt in dem Reaktionsbereiche 82f angeordnet ist, der der Einsatzwerkzeugbefestigung 14f zugewandt ist. Der Überschneidungsbereich 80f könnte einem der Reaktionsbereiche 82f, 84f oder einem eigenständigen Reaktionsbereich, beispielsweise mit einer weiteren Warnstufe, zugeordnet sein.

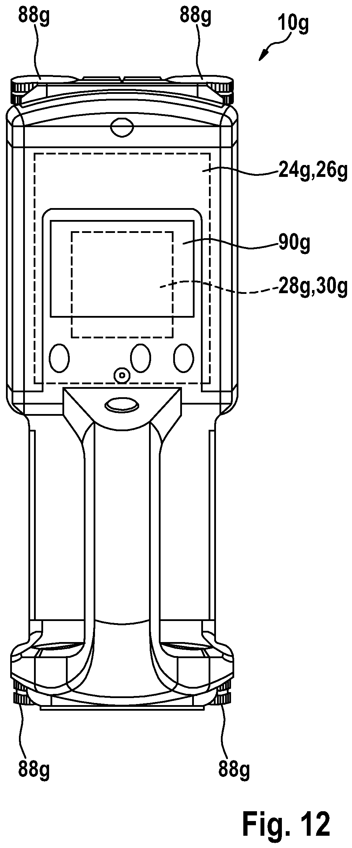

Figur 12 zeigt eine Handwerkzeug, und zwar ein Handortungsgerät 86g, das als ein Ortungsgerät zur Detektion von einem in einem Medium eingeschlossenen Objekt ausgebildet ist. Das Handortungsgerät 86g weist eine Ortungsvorrichtung 24g mit einer Ortungseinheit 26g auf. Die Ortungseinheit 26g umfasst in dem Ausführungsbeispiel der Figuren 1 bis 4 beschriebene planar aufgebaute Antennen 28g, 30g. Das Handortungsgerät 86g weist Rollen 88g mit nicht näher dargestellten Wegmessmitteln auf, mittels denen ein Bediener das Handortungsgerät 86g an dem Medium entlang verfahren kann. Auf einem Display 90g des Handortungsgerät 86g stellt das Handortungsgerät 86g detektierte Objekte in Abhängigkeit von dem verfahren Weg dar.

## Patentansprüche

1. Ortungsvorrichtung, insbesondere Handortungsgerät, mit einer Ortungseinheit (26a, 26b, 26g), die zumindest eine erste Antenne (28a-g, 68d, 68f, 72f, 76f) und eine zweite Antenne (30a-g, 70d, 70f, 74f, 78f) aufweist, wobei die Ortungseinheit (26a, 26b, 26g) zumindest ein Kompensationsmittel (32a) aufweist, das bei einem Betrieb zumindest ein Übersprechen (46a) eines Signals der ersten Antenne (28a-g, 68d, 68f, 72f, 76f) auf die zweite Antenne (30a-g, 70d, 70f, 74f, 78f) zumindest teilweise kompensiert, **dadurch gekennzeichnet, dass** das Kompensationsmittel (32a) zumindest eine Information des Übersprechens (46a) mit einem von der zweiten Antenne (30a-g, 70d, 70f, 74f, 78f) empfangenen Signal analog verknüpft, wobei das Kompensationsmittel (32a) einen Einfluss zumindest des Übersprechens (46a) auf ein an einem Empfänger (36a) ankommendes Signal wesentlich reduziert.

2. Ortungsvorrichtung nach Anspruch 1, **dadurch gekennzeichnet, dass** zumindest eine der Antennen (28a-g, 30a-g, 68d, 68f, 70d, 70f, 72f, 74f, 76f, 78f) planar aufgebaut ist.

3. Ortungsvorrichtung nach Anspruch 1 oder 2, **dadurch gekennzeichnet, dass** zumindest eine der Antennen (28a-g, 30a-g) in wenigstens einem Betriebsmodus symmetrisch gespeist ist.

4. Ortungsvorrichtung nach einem der vorhergehenden Ansprüche, **dadurch gekennzeichnet, dass** zumindest eine der Antennen (28a-g, 30a-g, 68d, 68f, 70d, 70f, 72f, 74f, 76f, 78f) dazu vorgesehen ist, schmalbandig zu senden und/oder zu empfangen.

5. Ortungsvorrichtung nach einem der vorhergehenden Ansprüche, **dadurch gekennzeichnet, dass** die zweite Antenne (30a-g, 70d, 70f, 74f, 78f) dazu vorgesehen ist, das Signal in einer von einer Polarisation der ersten Antenne (28a-g, 68d, 68f, 72f, 76f) unterschiedlichen zweiten Polarisation zu empfangen.

6. Ortungsvorrichtung nach einem der vorhergehenden Ansprüche, **dadurch gekennzeichnet, dass** die Ortungseinheit (26a, 26b) zumindest drei Antennen (28d, 30d, 68d, 70d) mit unterschiedlichen Polarisationen aufweist.

7. Ortungsvorrichtung nach einem der vorhergehenden Ansprüche, **gekennzeichnet durch** eine Recheneinheit (38a), wobei die Antennen (28f, 30f, 68f, 70f, 72f, 74f, 76f, 78f) unterschiedliche Richtbereiche (52f) aufweisen und die Recheneinheit (38a) dazu vorgesehen ist, aus Signalen der Antennen (28f, 30f, 68f, 70f, 72f, 74f, 76f, 78f) und Kenngrößen der Richtbereiche (52f) zumindest eine Information über eine Position eines Objektes zu ermitteln.

8. Ortungsvorrichtung nach einem der vorhergehenden Ansprüche, **dadurch gekennzeichnet, dass** die Ortungseinheit (26a, 26b) dazu vorgesehen ist, Objekte innerhalb eines Werkstücks (22a) und Objekte außerhalb des Werkstücks (22a) zu erfassen.

9. Ortungsvorrichtung nach einem der vorhergehenden Ansprüche, **dadurch gekennzeichnet, dass** die Ortungseinheit (26a, 26b) dazu vorgesehen ist, zumindest während einer Werkstückbearbeitung nur eine Änderung eines empfangenen Signals auszuwerten.

10. Ortungsvorrichtung nach einem der vorhergehenden Ansprüche, **dadurch gekennzeichnet, dass** die Ortungseinheit (26a, 26b) zwei unterschiedliche Reaktionsbereiche (82f, 84f) definiert.

11. Handwerkzeugmaschine, insbesondere Stich- und/oder Säbelsäge, mit einer Ortungsvorrichtung (24a, 24b, 24g) nach einem der vorhergehenden Ansprüche.

12. Verfahren mit einer Ortungsvorrichtung, insbesondere einem Handortungsgerät, die eine Ortungseinheit (26a, 26b, 26g) aufweist, die zumindest eine erste Antenne (28a-g, 68d, 68f, 72f, 76f) und eine zweite Antenne (30a-g, 70d, 70f, 74f, 78f) aufweist, insbesondere einer Ortungsvorrichtung nach einem der Ansprüche 1 bis 10, wobei bei einem Betrieb zumindest ein Übersprechen (46a) eines Signals der ersten Antenne (28a-g, 68d, 68f, 72f, 76f) auf die zweite Antenne (30a-g, 70d, 70f, 74f, 78f) zumindest teilweise kompensiert wird, **dadurch gekennzeichnet, dass** das Kompensationsmittel (32a) zumindest eine Information des Übersprechens (46a) mit einem von der zweiten Antenne (30a-g, 70d, 70f, 74f, 78f) empfangenen Signal analog verknüpft, wobei das Kompensationsmittel (32a) einen Einfluss zumindest des Übersprechens (46a) auf ein an einem Empfänger (36a) ankommendes Signal wesentlich reduziert.

## Claims

1. Locating apparatus, in particular handheld locating device, having a locating unit (26a, 26b, 26g) which has at least a first antenna (28a-g, 68d, 68f, 72f, 76f) and a second antenna (30a-g, 70d, 70f, 74f, 78f), wherein the locating unit (26a, 26b, 26g) has at least one compensation means (32a) which at least partially compensates for at least crosstalk (46a) of a signal from the first antenna (28a-g, 68d, 68f, 72f, 76f) to the second antenna (30a-g, 70d, 70f, 74f, 78f) during operation, **characterized in that** the compensation means (32a) links at least one item of information relating to the crosstalk (46a) in an analogue manner to a signal received by the second antenna (30a-g, 70d, 70f, 74f, 78f), wherein the compensation means (32a) substantially reduces an influence at least of the crosstalk (46a) on a signal arriving at a receiver (36a).

2. Locating apparatus according to Claim 1, **characterized in that** at least one of the antennas (28a-g, 30a-g, 68d, 68f, 70d, 70f, 72f, 74f, 76f, 78f) has a planar structure.

3. Locating apparatus according to Claim 1 or 2, **characterized in that** at least one of the antennas (28a-g, 30a-g) is fed in a balanced form in at least one operating mode.

4. Locating apparatus according to one of the preceding claims, **characterized in that** at least one of the antennas (28a-g, 30a-g, 68d, 68f, 70d, 70f, 72f, 74f, 76f, 78f) is provided for the purpose of transmitting and/or receiving in the narrowband.

5. Locating apparatus according to one of the preceding claims, **characterized in that** the second antenna (30a-g, 70d, 70f, 74f, 78f) is provided for the purpose of receiving the signal in a second polarization which differs from a polarization of the first antenna (28a-g, 68d, 68f, 72f, 76f).

6. Locating apparatus according to one of the preceding claims, **characterized in that** the locating unit (26a, 26b) has at least three antennas (28d, 30d, 68d, 70d) with different polarizations.

7. Locating apparatus according to one of the preceding claims, **characterized by** a computing unit (38a), wherein the antennas (28f, 30f, 68f, 70f, 72f, 74f, 76f, 78f) have different direction regions (52f) and the computing unit (38a) is provided for the purpose of determining at least one item of information relating to a position of an object from signals from the antennas (28f, 30f, 68f, 70f, 72f, 74f, 76f, 78f) and parameters of the direction regions (52f).

8. Locating apparatus according to one of the preceding claims, **characterized in that** the locating unit (26a, 26b) is provided for the purpose of capturing objects inside a workpiece (22a) and objects outside the workpiece (22a).

9. Locating apparatus according to one of the preceding claims, **characterized in that** the locating unit (26a, 26b) is provided for the purpose of evaluating only a change in a received signal at least during workpiece machining.

10. Locating apparatus according to one of the preceding claims, **characterized in that** the locating unit (26a, 26b) defines two different reaction regions (82f, 84f).

11. Handheld machine tool, in particular jigsaw and/or reciprocating saw, having a locating apparatus (24a, 24b, 24g) according to one of the preceding claims.

12. Method having a locating apparatus, in particular a handheld locating device, which has a locating unit (26a, 26b, 26g) which has at least a first antenna (28a-g, 68d, 68f, 72f, 76f) and a second antenna (30a-g, 70d, 70f, 74f, 78f), in particular a locating apparatus according to one of Claims 1 to 10, wherein at least crosstalk (46a) of a signal from the first antenna (28a-g, 68d, 68f, 72f, 76f) to the second antenna (30a-g, 70d, 70f, 74f, 78f) is at least partially compensated for during operation, **characterized in that** the compensation means (32a) links at least one item of information relating to the crosstalk (46a) in an analogue manner to a signal received by the second antenna (30a-g, 70d, 70f, 74f, 78f), wherein the compensation means (32a) substantially reduces an influence at least of the crosstalk (46a) on a signal arriving at a receiver (36a).

## Revendications

1. Dispositif de localisation, notamment appareil de localisation manuel, comprenant une unité de localisation (26a, 26b, 26g) qui possède au moins une première antenne (28a-g, 68d, 68f, 72f, 76f) et une deuxième antenne (30a-g, 70d, 70f, 74f, 78f), l'unité de localisation (26a, 26b, 26g) possédant au moins un moyen de compensation (32a) qui, lors d'un fonctionnement, compense au moins partiellement au moins une diaphonie (46a) d'un signal de la première antenne (28a-g, 68d, 68f, 72f, 76f) sur la deuxième antenne (30a-g, 70d, 70f, 74f, 78f), **caractérisé en ce que** le moyen de compensation (32a) lie de manière analogique au moins une information de la diaphonie (46a) avec un signal reçu par la deuxième antenne (30a-g, 70d, 70f, 74f, 78f), le moyen de compensation (32a) réduisant sensiblement une influence d'au moins la diaphonie (46a) sur un signal arrivant au niveau d'un récepteur (36a).

2. Dispositif de localisation selon la revendication 1, **caractérisé en ce qu'**au moins l'une des antennes (28a-g, 30a-g, 68d, 68f, 70d, 70f, 72f, 74f, 76f, 78f) est de construction plane.

3. Dispositif de localisation selon la revendication 1 ou 2, **caractérisé en ce qu'**au moins l'une des antennes (28a-g, 30a-g) est alimentée symétriquement dans au moins un mode de fonctionnement.

4. Dispositif de localisation selon l'une des revendications précédentes, **caractérisé en ce qu'**au moins l'une des antennes (28a-g, 30a-g, 68d, 68f, 70d, 70f, 72f, 74f, 76f, 78f) est conçue pour émettre et/ou recevoir en bande étroite.

5. Dispositif de localisation selon l'une des revendications précédentes, **caractérisé en ce que** la deuxième antenne (30a-g, 70d, 70f, 74f, 78f) est conçue pour recevoir le signal dans une deuxième polarisation différente d'une polarisation de la première antenne (28a-g, 68d, 68f, 72f, 76f).

6. Dispositif de localisation selon l'une des revendications précédentes, **caractérisé en ce que** l'unité de localisation (26a, 26b) possède au moins trois antennes (28d, 30d, 68d, 70d) ayant des polarisations différentes.

7. Dispositif de localisation selon l'une des revendications précédentes, **caractérisé par** une unité de calcul (38a), les antennes (28f, 30f, 68f, 70f, 72f, 74f, 76f, 78f) possédant des plages d'orientation (52f) différentes et l'unité de calcul (38a) étant conçue pour déterminer au moins une information à propos d'une position d'un objet à partir des signaux des antennes (28f, 30f, 68f, 70f, 72f, 74f, 76f, 78f) et des grandeurs caractéristiques des plages d'orientation (52f).

8. Dispositif de localisation selon l'une des revendications précédentes, **caractérisé en ce que** l'unité de localisation (26a, 26b) est conçue pour détecter des objets à l'intérieur d'une pièce ouvrée (22a) et des objets à l'extérieur de la pièce ouvrée (22a).

9. Dispositif de localisation selon l'une des revendications précédentes, **caractérisé en ce que** l'unité de localisation (26a, 26b) est conçue pour interpréter seulement une modification d'un signal reçu au moins pendant un usinage de la pièce ouvrée.

10. Dispositif de localisation selon l'une des revendications précédentes, **caractérisé en ce que** l'unité de localisation (26a, 26b) définit deux zones de réaction (82f, 84f) différentes.

11. Machine-outil manuelle, notamment scie sauteuse et/ou à lame en sabre, comprenant un dispositif de localisation (24a, 24b, 24g) selon l'une des revendications précédentes.

12. Procédé avec un dispositif de localisation, notamment un appareil de localisation manuel, lequel possède une unité de localisation (26a, 26b, 26g) qui possède au moins une première antenne (28a-g, 68d, 68f, 72f, 76f) et une deuxième antenne (30a-g, 70d, 70f, 74f, 78f), notamment un dispositif de localisation selon l'une des revendications 1 à 10, au moins une diaphonie (46a) d'un signal de la première antenne (28a-g, 68d, 68f, 72f, 76f) sur la deuxième antenne (30a-g, 70d, 70f, 74f, 78f) étant au moins partiellement compensée lors d'un fonctionnement, **caractérisé en ce que** le moyen de compensation (32a) lie de manière analogique au moins une information de la diaphonie (46a) avec un signal reçu par la deuxième antenne (30a-g, 70d, 70f, 74f, 78f), le moyen de compensation (32a) réduisant sensiblement une influence d'au moins la diaphonie (46a) sur un signal arrivant au niveau d'un récepteur (36a).
